# EUROPÄISCHE PATENTSCHRIFT

(11) **EP 1 734 275 B1**
(45) Veröffentlichungstag und Bekanntmachung des Hinweises auf die Patenterteilung: **10.03.2010**
(21) Anmeldenummer: 06011992.2
(22) Anmeldetag: 10.06.2006
(51) Int. Cl.: F16F 9/49

(54) **Stossdämpfer sowie Federelement für einen Stossdämpfer**
Shock absorber and spring element for a shock absorber
Amortisseur et élément de ressort pour un amortisseur

(30) Priorität: 18.06.2005 DE 102005028302; 13.05.2006 DE 102006022490
(43) Veröffentlichungstag der Anmeldung: 20.12.2006
(73) Patentinhaber: ThyssenKrupp Bilstein Suspension GmbH, 58256 Ennepetal (DE)
(72) Erfinder: Klein, Uwe, 42369 Wuppertal (DE)
(74) Vertreter: Döpp, Ludger

(56) Entgegenhaltungen:
- DE-A1- 1 680 584
- DE-A1- 3 151 771
- DE-A1- 3 510 866
- DE-A1- 4 408 405
- DE-B3- 10 344 102
- DE-U1- 20 213 259
- DE-U1- 20 307 898
- US-A- 3 275 312

## Beschreibung

Die Erfindung betrifft einen Stoßdämpfer, insbesondere einsetzbar im Bereich eines Kraftfahrzeuges, gemäß gattungsbildendem Teil des ersten Patentanspruchs (siehe US-A-32 75 312).

Die DE-C 35 10 866 beschreibt einen hydraulischen Zweirohr-Schwingungsdämpfer, der eine innerhalb eines zylindrisch ausgebildeten Rohres geführte Druckanschlagfeder beinhaltet, die sich einenends auf einem Steuerteller abstützt, wobei axial außerhalb des Steuertellers eine weitere Stützfeder vorgesehen ist.

Der DE-A 31 51 771 ist ein hohler, eine Kolbenstange eines Schwingungsdämpfers für ein Kraftfahrzeug umgebender Anschlagpuffer zu entnehmen, bestehend aus einem Faltenbalg aus massivem elastomeren Material, insbesondere Gummi. Die einzelnen Falten haben unterschiedliche Formen, die jeweils auf die gewünschte Federkennlinie abgestimmt werden können. Außerdem ist an jeder Falte ein inneres, an der Kolbenstange anliegendes Führungselement vorgesehen, das durch eine Führungsnoppe oder durch einen Führungsring gebildet werden kann. Der Anschlagpuffer ist hierbei außerhalb des eigentlichen Schwingungsdämpfers vorgesehen.

Dem DE-Gbm 203 07 898 ist ein Federelement zu entnehmen, basierend auf einem zylindrischen Dämpfungselement auf Basis von Polyisocyanat-Polyadditionsprodukten, das einen umlaufenden Sockel mit einem Durchmesser von 131 bis 135 mm und einer Dicke von 2 bis 10 mm sowie ein Kopfteil mit einem Durchmesser von 54 bis 56 mm aufweist. Der Abschluss des Kopfteils ist in Form einer konvexen Linse ausgestaltet.

Wird beispielsweise ein hydraulischer Stoßdämpfer eingesetzt, wie er in der DE-C 35 10 866 beschrieben wird, kann es geschehen, dass sich, wenn die einzelnen Windungen der mit linearer Kennlinie versehenen Druckfeder sich berühren (Feder geht auf Block), störende und deshalb unerwünschte Anschlaggeräusche einstellen. Um diese Geräusche zu unterdrücken, müssen separate Federelemente zwischen Anschlagfläche und Federteller eingefügt werden.

Durch die DE-A 44 08 405 ist ein Schwingungsdämpfer mit mechanischem Zuganschlag bekannt geworden. Zum Einsatz gelangt ein aus Kunststoff bestehender Anschlagkörper, bestehend aus einer Hülse und einem Flansch, der mit einer Feder eine wiederverschließbare Verbindung eingeht. Die Hülse weist an ihrem Innendurchmesser mindestens eine radiale Führungsfläche gegenüber einer Kolbenstange auf. Besondere in Längsrichtung der Kolbenstange wirkende Federeigenschaften sind bei diesem Anschlagkörper nicht gegeben.

In der US 3,275,312 wird ein Stoßdämpfer beschrieben, der zumindest ein Dämpferrohr, eine Kolbenstange, ein Verschlusselement für das Dämpferrohr und eine die Kolbenstange umgebende metallische Druckfeder aufweist. Außerhalb des Dämpferrohres wirkt die Druckfeder in Reihenschaltung mit einem aus Kunststoff oder Elastomer bestehendes Federelement zusammen, das unterschiedlichste Konturen aufweisen kann.

Der Erfindung liegt die Aufgabe zugrunde, einen Stoßdämpfer bereit zu stellen, der einerseits bei Vermeidung der Nachteile des Standes der Technik mit geringerer Bauteilanzahl auskommt und daher einfacher und kostengünstiger hergestellt und bei dem andererseits eine gezielte Federkennlinie mit bestimmtem Blockmaß eingestellt werden kann.

Diese Aufgabe wird dadurch gelöst, dass innerhalb des Dämpferrohres eine mit linearer Kennlinie versehene Druckfeder mit einem aus Elastomer- oder Kunststoffmaterial bestehenden Federelement mit progressiver Kennlinie in Reihe geschaltet ist, wobei das Federelement druckfederseitig nach Art eines die Druckfeder zumindest partiell führenden Federtellers und außerhalb des Federtellers zumindest partiell balgartig ausgebildet ist.

Vorteilhafte Weiterbildungen des erfindungsgemäßen Stoßdämpfers sind den zugehörigen Unteransprüchen zu entnehmen.

Das Federelement mit der progressiven Kennlinie, welches in Reihe mit der Druckfeder mit der linearen Kennlinie angeordnet ist, ist gleichzeitig als Federteller ausgebildet, auf welchem sich der eine Endbereich der Druckfeder mit der linearen Kennlinie abstützt. Durch diese Anordnung kann auf mindestens ein zusätzliches Bauteil, nämlich den separaten Federteller verzichtet werden, wodurch die Teileanzahl des Stoßdämpfers reduziert wird und somit ein einfacherer Aufbau des Stoßdämpfers bei gleichzeitiger Kostensenkung herbeigeführt werden kann.

Das weitere Federelement stellt einen Klemmbereich zur Aufnahme der Druckfeder mit der linearen Kennlinie bereit und gewährleistet eine sichere radiale Führung der Druckfeder auf der Kolbenstange. Darüber hinaus wird ein reibungsarmes axiales Gleiten des Federtellers auf der Kolbenstange sichergestellt.

Durch den Erfindungsgegenstand wird die Gesamtkennlinie der Druckfeder in Wirkverbindung mit dem weiteren Federelement (Reihenschaltung) somit im Blockbereich ebenfalls progressiv. Dadurch berühren sich die Federwindungen der Druckfeder nicht stoßartig und geräuschvoll, sondern abgefedert und leise. Auf diese Weise wird die Übertragung störender Anschlaggeräusche in den Fahrzeuginnenraum verhindert.

Das Federelement besteht, einem weiteren Gedanken der Erfindung gemäß, aus einem elastomeren Polyetherester (TEEE). Durch an den jeweiligen Einsatzfall angepasste Federelemente können konkrete Federkennlinien mit definiertem Blockmaß eingestellt werden. Die Kennlinie lässt sich hierbei durch Modifikation des Balgbereiches, nämlich Änderung der Wandstärke, der Länge sowie des Innen-/Außendurchmesserverhältnisses beeinflussen und somit auf den jeweiligen Einzelfall abstimmen. Ebenfalls möglich ist, die außerhalb des Balgbereichs gegebenen Materialstärken des Federelements bedarfsweise zu modifizieren.

Von Vorteil kann es sein, am Umfang des Federelementes mehrere radiale Durchgangslöcher vorzusehen. Eventuell im Balgbereich sich ansammelnde Ölanteile können beim Zusammendrücken des Federbereiches somit radial nach außen bzw. beim Auseinanderziehen radial nach innen transportiert werden und stören die Funktionsweise des Federelementes nicht.

Mit dem Erfindungsgegenstand gehen somit Vorteile einher, die durch Integration folgender Funktionen in ein- und dasselbe Bauteil erreicht werden:
1. Federteller
   a. Aufnahme der Druckfeder (z. B. über Presspassung)
   b. Anschlagfläche bereit stellen
   c. Führung radial (z. B. auf der Kolbenstange)
2. Druckanschlag
   a. progressive Federkennlinie

Der Erfindungsgegenstand ist anhand eines Ausführungsbeispieles in der Zeichnung dargestellt und wird wie folgt beschrieben. Es zeigen:

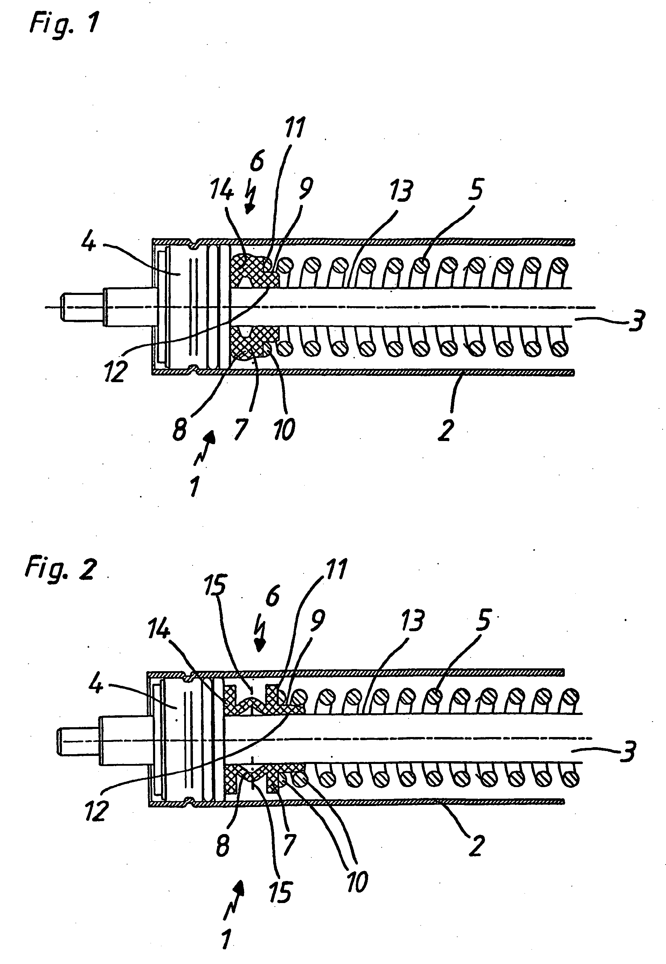

- Figuren 1 und 2: Prinzipskizzen von Stoßdämpfern mit unterschiedlich gestalteten Federelementen.

Figur 1 zeigt als Prinzipsskizze einen lediglich angedeuteten Stoßdämpfer 1, der beispielsweise im Bereich eines Kraftfahrzeugfahrwerks eingesetzt werden kann. Der Stoßdämpfer 1 beinhaltet zumindest ein Dämpferrohr 2, eine Kolbenstange 3, ein Verschlusselement 4 für das Dämpferrohr 2, eine die Kolbenstange 3 umgebende metallische Druckfeder 5 mit linearer Federkennlinie sowie ein damit in Reihe geschaltetes, sich am Verschlusselement 4 axial abstützendes weiteres Federelement 6 mit progressiver Federkennlinie. Das weitere Federelement 6 soll in diesem Beispiel aus einem elastomeren Polyetherester (TEEE) bestehen und beinhaltet einen Federteller 7, an welchem ein, mit progressiver Kennlinie versehener, etwa balgartig ausgebildeter Federbereich 8 einstückig angeformt ist.

Der Federteller 7 ist dergestalt ausgebildet, dass einerseits ein radialer Klemmbereich 9 für mindestens eine Federwindung 10 der Druckfeder 5 vorgesehen und andererseits ein axialer Stützbereich 11 für diese Federwindung 10 gegeben ist. Der radiale Klemmbereich 9 kann so ausgestaltet werden, dass er die Federwindung 10 beispielsweise über eine Presspassung aufnimmt. Der Innendurchmesser 12 des Federtellers 7 ist hierbei so gewählt, dass ein reibungsarmes axiales Gleiten auf der äußeren Umfangsfläche 13 der Kolbenstange 3 gewährleistet ist. In Folge der einstückigen Ausgestaltung des Federtellers 7 in Verbindung mit dem Federbereich 8 sind im Stand der Technik beschriebene, separat ausgebildete, Federteller entbehrlich.

Figur 2 zeigt ein alternativ zu Figur 1 ausgebildetes Federelement 6. Gleiche Elemente werden mit gleichen Bezugszeichen versehen. Auch hier ist ein Federteller 7 vorgesehen, an welchem sich ein mit progressiver Kennlinie versehener, etwa balgartig ausgebildeter Federbereich 8 einstückig anschließt. Dieser Federbereich 8 läuft verschlusselementseitig in einen dem Federteller 7 entsprechend ausgebildeten Anschlagpuffer 14 auf, der sich am Verschlusselement 4 abstützt. Der Klemmbereich 9 für die Druckfeder 5 ist länger als bei Figur 1 ausgebildet, so dass hier noch eine zweite Federwindung aufgebracht und geführt werden kann.

Die beiden Ausführungsbeispiele zeigen unterschiedlich gestaltete Federbereiche 8. Durch gezielte Modifikation der Länge des Federbereiches 8, dessen radiale Wandstärke sowie das Innen-/Außendurchmesserverhältnis lassen sich an den jeweiligen Einsatzfall konkret angepasste Federkennlinien mit definiertem Blockmaß einstellen. Von besonderem Vorteil ist die Materialauswahl des Federelements 6, da sich der gewünschte Effekt nicht mit jedem beliebigen Werkstoff in optimaler Weise herbeiführen lässt. Bei dem bevorzugt eingesetzten Werkstoff (elastomerer Polyetherester (TEEE)) kann durch spezielle Prozessschritte im Rahmen des Herstellungsverfahrens erreicht werden, dass der Werkstoff bei seinem Zusammendrücken Energie absorbiert und diese als potenzielle Energie/Federenergie speichert. Bei Entlastung gibt der Werkstoff die gespeicherte Energie wieder frei, so dass das Rückstellvermögen des Federelementes vergleichbar ist mit dem einer Stahlfeder.

Im Federbereich 8 sind um Umfang verteilt mehrere radial verlaufende Durchgangslöcher 15 eingebracht. Eventuell im Balgbereich sich ansammelnde Ölanteile können beim Zusammendrücken des Federbereiches somit radial nach außen bzw. beim Auseinanderziehen radial nach innen transportiert werden und stören die Funktionsweise des Federelementes nicht.

### Bezugszeichenliste

- 1.: Stoßdämpfer
- 2.: Dämpferrohr
- 3.: Kolbenstange
- 4.: Verschlusselement
- 5.: Druckfeder
- 6.: Federelement
- 7.: Federteller
- 8.: Federbereich
- 9.: Klemmbereich
- 10.: Federwindung
- 11.: Stützbereich
- 12.: Innendurchmesser
- 13.: Umfangsfläche
- 14.: Anschlagpuffer
- 15.: Durchgangsloch

## Patentansprüche

1. Stoßdämpfer, zumindest beinhaltend ein Dämpferrohr (2), eine Kolbenstange (3), ein Verschlusselement (4) für das Dämpferrohr (2) und eine die Kolbenstange (3) umgebende metallische Druckfeder (5), **dadurch gekennzeichnet, dass** innerhalb des Dämpferrohres (2) eine mit linearer Kennlinie versehene Druckfeder (5) mit einem aus Elastomer- oder Kunststoffmaterial bestehenden Federelement (6) mit progressiver Kennlinie in Reihe geschaltet ist, wobei das Federelement (6) druckfederseitig nach Art eines die Druckfeder (5) zumindest partiell führenden Federtellers (7) und außerhalb des Federtellers (7) zumindest partiell balgartig (8) ausgebildet ist.

2. Stoßdämpfer nach Anspruch 1, **dadurch gekennzeichnet, dass** das Federelement (6) verschlusselementseitig vorgesehen ist und an dem Verschlusselement (4) anliegt.

3. Stoßdämpfer nach Anspruch 1, **dadurch gekennzeichnet, dass** das Federelement (6) kolbenseitig vorgesehen und an einer zugeordneten Stelle eines Kolbens anliegt.

4. Stoßdämpfer nach einem der Ansprüche 1 bis 3, **dadurch gekennzeichnet, dass** der den Federteller (7) bildende Bereich des Federelementes (6) einerseits einen radialen Klemmbereich (9) und andererseits einen axialen Stützbereich (11) für das dem Federteller (7) zugewandte Ende (10) der Druckfeder (5) beinhaltet.

5. Stoßdämpfer nach einem der Ansprüche 1 bis 4, **dadurch gekennzeichnet, dass** zumindest der Federteller (7) einen solchen Innendurchmesser (12) aufweist, dass ein reibungsarmes, axiales Gleiten auf der Kolbenstange (3) herbeiführbar ist.

6. Stoßdämpfer nach einem der Ansprüche 1 bis 5, **dadurch gekennzeichnet, dass** durch Modifizierung des Balgs (8) hinsichtlich seiner axialen Länge, seine radiale Wandstärke und/oder seines Innen- /Außendurchmesserverhältnisses sowie des eingesetzten Materials eine gezielte Federkennlinie mit vorgebbarem Blockmaß am Federelement (6) einstellbar ist.

7. Stoßdämpfer nach einem der Ansprüche 1 bis 6, **dadurch gekennzeichnet, dass** das Federelement (6) aus einem elastomeren Polyetherester (TEEE) hergestellt ist.

8. Stoßdämpfer nach einem der Ansprüche 1 bis 7, **dadurch gekennzeichnet, dass** das Federelement (6) einstückig mit dem Federteller (7) hergestellt ist.

9. Stoßdämpfer nach einem der Ansprüche 1 bis 8, **dadurch gekennzeichnet, dass** am Umfang des Federbereiches (8) verteilt mehrere radial verlaufende Durchgangslöcher (15) vorgesehen sind.

## Claims

1. Shock absorber, at least including a damper tube (2), a piston rod (3), a closure element (4) for the damper tube (2) and a metallic compression spring (5) which surrounds the piston rod (3), **characterised in that** connected in series within the damper tube (2) is a compression spring (5) which is provided with a linear characteristic and has a spring element (6) which consists of elastomeric material or synthetic material and has a progressive characteristic, wherein the spring element (6) is formed on the compression spring-side in the manner of a spring plate (7), which guides the compression spring (5) at least partially, and is formed outside the spring plate (7) at least partially in the manner of a bellows (8).

2. Shock absorber as claimed in claim 1, **characterised in that** the spring element (6) is provided on the closure element-side and lies against the closure element (4).

3. Shock absorber as claimed in claim 1, **characterised in that** the spring element (6) is provided on the piston-side and lies against an associated location on a piston.

4. Shock absorber as claimed in any one of claims 1 to 3, **characterised in that** the region of the spring element (6) which forms the spring plate (7) includes on the one hand a radial clamping region (9) and on the other hand an axial support region (11) for the end (10) of the compression spring (5) facing towards the spring plate (7).

5. Shock absorber as claimed in any one of claims 1 to 4, **characterised in that** at least the spring plate (7) has an inner diameter (12) such that low-friction, axial sliding can be effected on the piston rod (3).

6. Shock absorber as claimed in any one of claims 1 to 5, **characterised in that** by modifying the bellows (8) in terms of its axial length, its radial wall thickness and/or its inner/outer diameter ratio and the material used, it is possible to set a specific spring characteristic having a specifiable block dimension on the spring element (6).

7. Shock absorber as claimed in any one of claims 1 to 6, **characterised in that** the spring element (6) is produced from an elastomeric polyether ester (TEEE).

8. Shock absorber as claimed in any one of claims 1 to 7, **characterised in that** the spring element (6) is produced in one piece with the spring plate (7).

9. Shock absorber as claimed in any one of claims 1 to 8, **characterised in that** several radially extending through-holes (15) are provided in a manner distributed on the periphery of the spring region (8).

## Revendications

1. Amortisseur de chocs comprenant au moins un tube amortisseur (2), une tige de piston (3) un élément de fermeture (4) pour le tube amortisseur (2) et un ressort de pression (5) métallique, qui entour la tige de piston (3), **caractérisé en ce que**, à l'intérieur du tube amortisseur (2), un ressort de pression (5), présentant une ligne caractéristique linéaire, est monté en série avec un élément élastique (6), à ligne caractéristique progressive, qui consiste en un élastomère ou en une matière synthétiques, l'élément élastique (6) étant conçu, côté ressort de pression, sous la forme d'une coupelle de ressort (7) guidant, au moins partiellement, le ressort de pression (5), et, en dehors de la coupelle de ressort (7), au moins partiellement en forme de soufflet (8).

2. Amortisseur de chocs selon la revendication 1, **caractérisé en ce que** l'élément élastique (6) est prévu du côté de l'élément de fermeture et porte contre l'élément de fermeture (4).

3. Amortisseur de chocs selon la revendication 1, **caractérisé en ce que** l'élément élastique (6) est prévu du côté du piston et porte contre un endroit correspondant d'un piston.

4. Amortisseur de chocs selon l'une des revendications 1 à 3, **caractérisé en ce que** la zone de l'élément élastique (6), qui forme la coupelle de ressort (7), comprend, d'une part, une zone de serrage radiale (9) et, d'autre part, une zone d'appui axiale (11), pour l'extrémité (10) du ressort de pression (5), qui est orientée vers la coupelle de ressort (7).

5. Amortisseur de chocs selon l'une des revendications 1 à 4, **caractérisé en ce que** la coupelle de ressort (7), au moins, présente un tel diamètre intérieur (12) qu'un glissement axial à faible friction est provoqué sur la tige de piston (3).

6. Amortisseur de chocs selon l'une des revendications 1 à 5, **caractérisé en ce que**, par la modification du soufflet (8), en ce qui concerne sa longueur axiale , sa résistance de paroi radiale et / ou son rapport diamètre intérieur / diamètre extérieur, ainsi que la matière utilisée, une ligne caractéristique de ressort ciblée peut être réglée sur l'élément élastique (6) avec volume prédéfini.

7. Amortisseur de chocs selon l'une des revendications 1 à 6, **caractérisé en ce que** l'élément élastique (6) est fabriqué avec un polyétherester (TEEE) élastomère.

8. Amortisseur de chocs selon l'une des revendications 1 à 7, **caractérisé en ce que** l'élément élastique (6) est fabriqué d'une pièce avec la coupelle de ressort (7).

9. Amortisseur de chocs selon l'une des revendications 1 à 8, **caractérisé en ce que** sont prévus plusieurs trous de passage (15), qui, s'étendant radialement, sont répartis sur le pourtour de la zone élastique (8).
